# EUROPÄISCHE PATENTSCHRIFT

(11) **EP 0 969 756 B1**
(45) Veröffentlichungstag und Bekanntmachung des Hinweises auf die Patenterteilung: **23.10.2002**
(21) Anmeldenummer: 97906071.2
(22) Anmeldetag: 13.03.1997
(51) Int. Cl.: A47J 42/50, A47J 42/16, A47J 42/18

(54) **VORRICHTUNG ZUR AUFBEREITUNG VON KAFFEEPULVER**
DEVICE FOR PREPARING COFFEE POWDER
DISPOSITIF POUR PRODUIRE DE LA POUDRE DE CAFE

(43) Veröffentlichungstag der Anmeldung: 12.01.2000
(73) Patentinhaber: EGRO AG, CH-5443 Niederrohrdorf (CH)
(72) Erfinder: KARG, Anton, CH-5406 Rütihof (CH); PUDDU, Raffaele, CH-5443 Niederrohrdorf (CH)
(74) Vertreter: Frauenknecht, Alois J.
(86) Internationale Anmeldenummer: CH9700106
(87) Internationale Veröffentlichungsnummer: WO98040000

(56) Entgegenhaltungen:
- CH-A- 393 654
- DE-A- 2 418 473
- DE-A- 3 021 368
- DE-A- 3 343 118
- DE-A- 3 535 119
- DE-A- 3 903 017
- NL-C- 54 458

## Beschreibung

Die vorliegende Erfindung bezieht sich auf eine Vorrichtung gemäss dem Oberbegriff des Anspruchs 1.

Elektrische Kaffeemühlen mit einer portionenweisen Dosierung des Kaffeepulvers sind notorisch bekannt und finden vorwiegend in Kaffeeautomatem im Gastgewerbe aber auch in zunehmenden Masse in Büros und Privathaushalten Anwendung. Derartige Vorrichtungen sind oft relativ voluminös und/oder verursachen durch die Umlenkung des Bohnen- und/oder Pulverflusses mit den dazu nötigen Schaltelementen störenden Lärm.

Aus der DE -A- 24 18 473 ist eine Haushaltmühle, insbesondere Kaffemühle gemäss dem Oberbegriff des Patentanspruchs 1 bekannt, bei der die Achse des Mahlwerks mit dem Lot einen spitzen Winkel bildet, so dass der grösste Teil des Mahlguts auf direktem Weg zwischen die Mahlscheiben gelangt, dort zerkleinert und durch die einwirkenden Zentrifugalkräfte ausgeworfen wird. Das Mehl bzw. das Kaffeepulver strömt von der Schwerkraft unterstützt, in einen formschlüssig angeordneten Auffangbehälter.

Die Einstellung des Mahlgrades, d.h. des Abstands zwischen den Mahlscheiben erfolgt bei der bekannten Haushaltmühle Siehe DE-A-3 903 017 durch eine über dem Elektromotor, ausserhalb seiner Lagerstellen, angeordnete Verstellvorrichtung. Dies führt, trotz der Schräglage des Motors zu einer relativ grossen Bauhöhe, so dass sich diese Mühle nicht zum Einbau in gedrängt aufgebaute Kaffeeautomaten eignet.

Es ist daher Aufgabe der vorliegenden Erfindung eine betriebssichere Vorrichtung zu schaffen, welche die Nachteile des Stands der Technik nicht aufweist, einen optimalen Materialfluss besitzt und keine störenden Geräusche bei der Portionierung und/oder dem Pulver-Auswurf verursacht.

Es ist ebenfalls Aufgabe der Erfindung, die Bauhöhe der Vorrichtung gering zu halten, bzw. diese so zu gestalten, dass sie einer bestehenden Brühgruppe in einem Kaffeeautomaten platzsparend zugeordnet werden kann.

Erfindungsgemäss ist diese Aufgabe dadurch gelöst, dass die Mahlscheiben im Lot angeordnet sind oder mit dem Lot einen spitzen Winkel bilden, wobei die statische Zufuhr der Kaffeebohnen über einen Schütt-Trichter vorwiegend halbseitig zwischen die Mahlscheiben erfolgt.

Die Zuführung der Kaffeebohnen gemäss den Merkmalen des Anspruchs 1 verringert die Gefahr eines Blockierens der Mahlscheiben, gelangen doch die Bohnen, als Folge der im Lot wirkenden Schwerkraft, vorwiegend in den unteren Bereich des Mahlwerks, so dass genügend Raum zu deren Verdrängung und Verteilung über beide Mahlscheiben verbleibt. Zusätzlich kann die Antriebsleistung des Elekromotors verringert werden, arbeitet doch die Kaffeemühle mit einem geringeren, erforderlichen Drehmoment.

Ein weiterer Vorteil besteht darin, dass durch eine Vorwahl der Mahlzeit die Reproduzierbarkeit der Kaffeepulvermenge verbessert ist, gegenüber einer koaxialen Zuführung der Bohnen.

In nachfolgenden abhängigen Ansprüchen sind vorteilhafte Weiterbildungen des Erfindungsgegenstands beschrieben.

Die notwendige Bauhöhe wird durch die Vorrichtung nach Anspruch 2 beträchtlich reduziert, erlaubt sie doch den an sich freien Bereich zwischen dem Stator und dem Mahlwerk zu nutzen. Ein weiterer Vorteil besteht darin, dass die beim Betrieb der Kaffeemühle entstehende Wärmedehnung durch das Mahlwerkgehäuse aufgenommen wird; der Mahlspalt zwischen den Mahlscheiben verändert sich nicht.

Besonders vorteilhaft und wirtschaftlich zu realisieren ist die Verstellvorrichtung nach Anspruch 3.

Die Ausgestaltung nach Anspruch 4 lässt eine sehr einfache Einstellung mittels eines einfachen Verstellwerkzeugs - einem zylindrischen Stift - zu.

Durch den Einbezug einer Druckfeder, Anspruch 5, wird das axiale Lagerspiel ausgeglichen; das Mahlwerk hält seine einmal eingestellte Einstellung bei, Wärmedehnungen werden kompensiert. Zudem gewährleistet die resultierende Verriegelung der Verstellscheibe die Einhaltung ihrer Lage auch bei Vibrationen.

Bewährt hat sich eine Dosierung der Kaffeepulver-Menge durch die Einstellung der Mahlzeit gemäss Anspruch 6.

Die kinetische Energie des frischgemahlenen Kaffeepulver ist aufgrund der an der rotierenden Mahlscheibe resultierenden Zentrifugalkräfte sehr gross; eine Lamelle aus Federstahl, Anspruch 7, nimmt einen wesentlichen Teil der Energie auf und verhindert das Verunreinigen einer nachgeschalteten Kaffeemaschine.

Der Kaffepulver-Auswurf nach Anspruch 8 ist eine bevorzugte Ausführungsform; er nimmt die gesamte kinetische Energie des gemahlenen Kaffeepulvers auf und füllt sich bei geeigneter Dimensionierung, ohne dass ein Rückstau auf das Mahlwerk erfolgt.

Durch zwei ineinander geschobene Hohlzylinder gemäss Anspruch 9 ergibt sich eine Art Schlitz-Verschluss, welcher leicht bewegt werden kann, auch bei feinem Kaffeepulver.

Durch das Vibrationselement - beispielsweise ein durch einen kleinen HF-Generator gespeistes Piezoelement - lässt sich die Entleerung des Kaffeepulver-Auswurfs verbessern, Anspruch 10.

Insbesondere bei grösseren Kaffeeautomaten besteht der Wunsch nach dem Einsatz von zwei oder mehr verschiedenen Kaffeesorten, so dass sich die Unterteilung des Behälters nach Anspruch 11 als zweckmässig erweist.

Besonders wirtschaftlich ist der Einsatz eines steuerbaren Schwenktrichters nach Anspruch 12, so dass sich die nachgeschaltete Brühgruppe vereinfachen lässt.

In nachfolgenden Zeichnungen sind Ausführungsbeispiele des Erfindungsgegenstandes näher erläutert. Es zeigen:
- Fig. 1: ein praktisch realisiertes Ausführungsbeispiel von zwei in einem Kaffeeautomaten angeordneten Kaffeemühlen
- Fig. 2: Einzelheiten einer der beiden Kaffeemühlen Fig. 1,
- Fig. 3: eine Weiterentwicklung eines gesteuerten Kaffeepulver-Auswurfs mit einem Vibrationselement und
- Fig. 4: eine Schnittdarstellung senkrecht zur Längsachse der Fig. 3, bei geschlossenen Auswurf-Schlitzen.

In nachfolgenden Figuren sind gleiche Teile mit gleichen Bezugsziffern versehen.

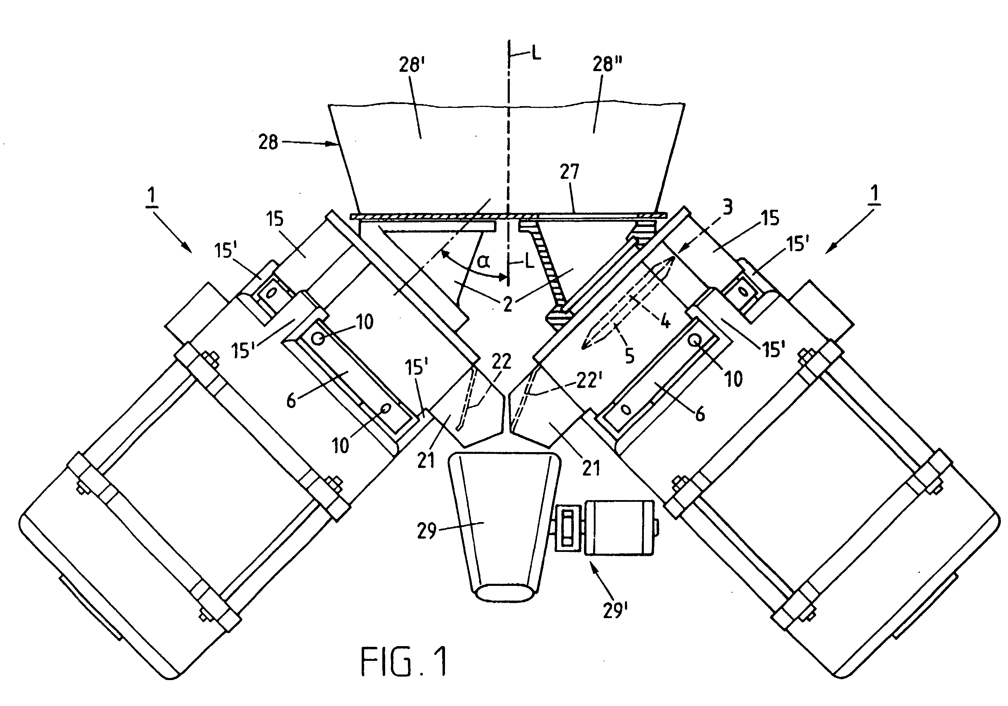

In Fig 1 sind mit 1 Kaffeemühlen bezeichnet. Diese sind rechtwinklig zueinander, in einem Winkel α von 45° zum Lot L angeordnet und mit ihren beiden Schütt-Trichtern 2 über eine Wählscheibe 27 an einen Bohnen-Behälter 28, mit zwei Kammern 28', 28", angeflanscht.

Im weiteren sind in Fig. 1 ein Mahlwerk 3 mit zwei Mahlscheiben 4 und 5 angedeutet, welches sich in einem Mahlwerkgehäuse 15 befindet. In einer Aussparung im Gehäuse 15, gebildet durch Verbindungsstege 15', ist ein Teil eines drehbaren Lagerflansches 6 mit Bohrungen 10 ersichtlich.

Beide Mahlwerke 3 weisen gleichartige Kaffeepulver-Auswürfe 21, mit gestrichelt eingezeichneten Federlamellen 22 und 22' auf. Die Auswürfe 21 münden in einen Schwenktrichter 29 mit Verstellmechanismus 29', welcher darunterliegende Brühkammern - nicht dargestellt - beschickt.

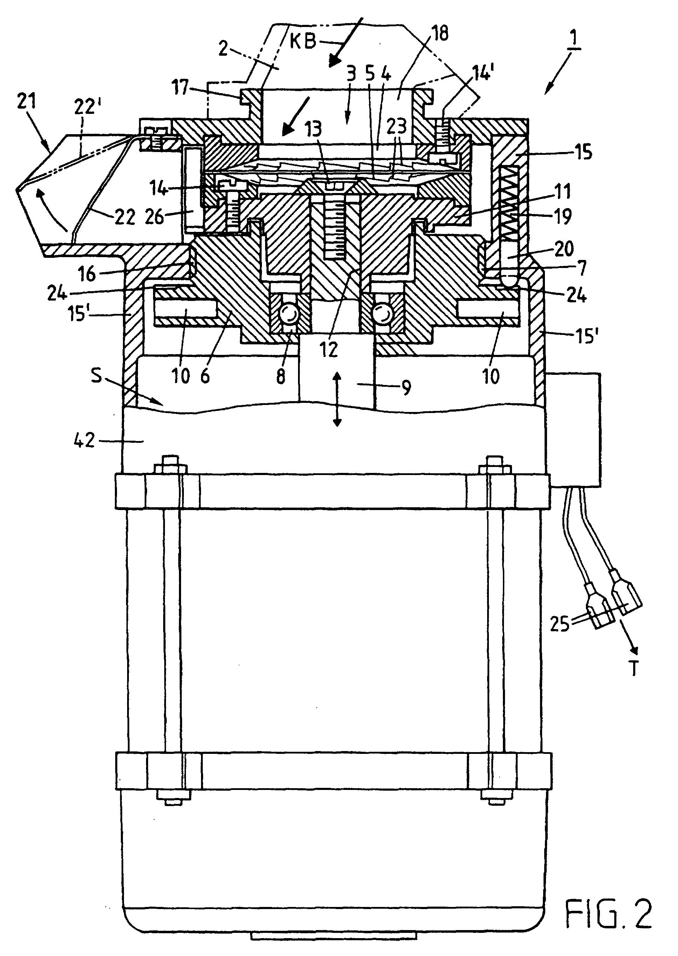

Die Darstellung Fig. 2 zeigt die rechtsseitig angeordnete Kaffeemühle 1 in einer Teilschnitt-Darstellung. Ersichtlich sind wiederum - linksseitig - der Kaffeepulver-Auswurf 21 mit seiner Federlamelle 22, welche auch in ihrer, in Pfeilrichtung ausgelenkten Auswurfstellung 22' angedeutet ist. Randseitig sind die einander gegenüberliegenden Verbindungsstege 15' des Gehäuses 15 zu sehen; im Innern der Lagerflansch 6 mit seinem axialen Bohrungen 10, darüberliegenden als Vertiefungen ausgebildeten Rasterungen 24. Der Lagerflansch 6 ist mit einem Aussengewinde 7 versehen und in ein Innengewinde 16 des Mahlwerkgehäuses 15 eingeschraubt. Auf der zentralen Motorwelle 9 sitzt ein handelsübliches Kugellager 8, welches mit seinem Aussenring im Lagerflansch 6 gelagert ist. Darüber befindet sich, in einer grösseren Bohrung des Lagerflansches 6 ein Montage-Flansch 11, auf welchem die untere, rotierende Mahlscheibe 5 des Mahlwerks 3 mit drei peripheren Fixier-Schrauben 14 zentriert befestigt ist. In geringem Abstand darüber befindet sich die feststehende Mahlscheibe 4 mit ihren Fixier-Schrauben 14', welche im oberen Mahlwerk-Flansch 17 zentriert festgeschraubt ist. Die Mahlscheiben 4 und 5 sind in an sich bekannter Weise mit Mahlzähnen 23 versehen.

Der Montageflansch 11 ist seinerseits mit seiner Zentrierbohrung 12 und einer Zentralverschraubung 13 auf der Motorwelle 9 fixiert.

Der darüber befindliche Schütt-Trichter 2 ist durch eine strichpunktierte Linie angedeutet; die Zuführung für Kaffeebohnen KB ist mit 18 bezeichnet.

Der Fig. 2, in Verbindung mit Fig. 1, ist zu entnehmen, dass die Kaffeebohnen KB lotrecht, d.h. als Folge der Schwerkraft halbseitig zwischen die Mahlscheiben 4;5 nachrutschen und dass dementsprechend für deren Verdrängung im oberen Teil des Mahlwerks 3 Platz vorhanden ist, so dass diese sich nicht verklemmen können.

Im weiteren befinden sich auf dem tellerförmigen Lagerflansch 6 Vertiefungen, welche eine Rasterung 24 ergeben, in die drei radial angeordnete, bombierte Bolzen 20 eingreifen und die durch Federn 19 belastet sind.

Seitlich am notorisch bekannten Motor der Kaffeemühle 1 befindet sich ein Klemmenkasten mit Elektro-Anschlüssen 25, welche zu einer zeitlich gesteuerten Speisequelle T geführt sind.

Aus Fig. 2 lässt sich ersehen, dass durch Verdrehen des Lagerflansches 6 mittels eines - beispielsweise - zylindrischen Stiftes dieser mit seinem Kugellager 8, der Welle 9 und der Mahlscheibe 5 in seiner Lage zum Stator S, bzw. Motorgehäuse 42 in Pfeilrichtung axial verschoben wird und dass dabei die bombierten Bolzen 20 zeitweilig aus der Rasterung 24 gehoben werden.

Dies bewirkt eine gezielte Einstellung des Mahlgrades und verhindert zudem ein ungewolltes Verstellen bei Vibrationen.

Die Dosierung der Pulvermenge erfolgt vorzugsweise durch eine zeitliche Steuerung der Mahldauer durch eine geeignete Speisequelle T mit einem notorisch bekannten Impulszähler. Die Verbindung zur Speisequelle T erfolgt über steckbare Anschlüsse 25.

Es ist ebenfalls Fig. 2 zu entnehmen, dass die Federlamelle 22 eine dynamische Bremse für das frischgemahlene und aus dem Mahlwerk 3 geschleuderte Kaffeepulver darstellt und dass sich diese dadurch in Pfeilrichtung auslenkt, gemäss der gestrichelt gezeichneten Federlamelle 22'.

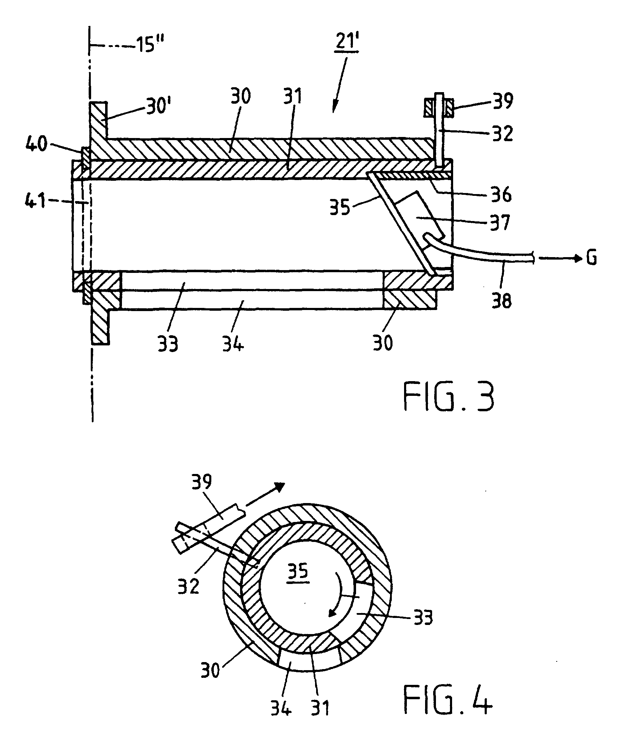

Der Kaffeepulver-Auswurf 21', gemäss Fig. 3, stellt gegenüber dem Auswurf 21 eine Verbesserung dar, erlaubt er doch dessen vollständige Entleerung.

Dieser Auswurf 21' ist an einem leicht gegenüber Fig. 2 geänderten Mahlwerkgehäuse 15" über einen Flansch 30' angebracht und weist ein Auswurf-Rohr 30 auf, in dessen Innern, drehfähig gelagert, ein Auswurf-Zylinder 31 eingeschoben ist. Der Auswurf-Zylinder 31 besitzt eine Ringnut 41, in welcher eine Wellensicherung 40 (Seger-Ring) eingefügt und der auf seiner Gegenseite durch einen Schwenkhebel 32 axial gesichert ist.

Das Auswurf-Rohr 30 und der Auswurf-Zylinder 31 weisen Auswurf-Schlitze 33 bzw. 34 auf die durch ein Schwenken gemäss Fig. 4 verschlossen, bzw. gemäss Darstellung Fig. 3 geöffnet werden. Dieser Vorgang erfolgt über einen Schwenkarm 39, der in Pfeilrichtung, Fig. 4 mit einem Elektromagneten verbunden ist und den Schwenkhebel 32 um zirka 90° verdreht.

Zur verbesserten Entleerung des Kaffeepulver-Auswurfs 21' ist dieser nach Fig. 3 mit einem Vibrationselement 35, mit aufgesetztem Piezo-Element 37 ausgerüstet, welches über ein Speisekabel 38 mit einem bekannten HF-Generator G verbunden ist, mit dem das Piezo-Element 37 und das Vibrationselement 35 in Resonanz schwingen.

Während das Ausführungsbeispiel auf eine Dosierung durch eine Vorgabe, bzw. Vorwahl der Mahlzeit ausgerichtet ist, lässt sich der Erfindungsgegenstand ebenso in Verbindung mit volumetrischen Dosiervorrichtungen anwenden.

Eine bevorzugte Verwendung findet die in Fig. 1 dargestellte Konstruktion in einem sehr kompakten und ansprechend gestalteten Kaffeeautomaten für das Gastgewerbe, gemäss der Publikation WO 98/39998.

### Bezeichnungsliste

- 1: Kaffeemühle
- 2: Schütt-Trichter
- 3: Mahlwerk
- 4: feststehende Mahlscheibe
- 5: rotierende Mahlscheibe (verstellbar)
- 6: Lagerflansch
- 7: Aussengewinde
- 8: Kugellager
- 9: Motorwelle
- 10: Bohrungen (Verstellung)
- 11: Montage-Flansch
- 12: Zentrierbohrung
- 13: Zentralverschraubung
- 14, 14': Fixier-Schrauben
- 15: Mahlwerkgehäuse
- 15': Verbindungsstege an 15
- 16: Innengewinde
- 17: Mahlwerk-Flansch
- 18: Zufuhr-Bohrung
- 19: Druckfedern
- 20: Bolzen (bombiert)
- 21: Kaffeepulver-Auswurf
- 21': Kaffeepulver-Auswurf (mit Schlitzverschluss)
- 22: Federlamelle
- 22': Federlamelle ausgelenkt
- 23: Mahlzähne (Zähne von 4; 5)
- 24: Rasterung (Vertiefungen in 6)
- 25: Elektro-Anschlüsse
- 26: Abstreiff-Nocken (drei)
- 27: Wählscheibe
- 28: Bohnen-Behälter
- 28': 1. Kammer
- 28": 2. Kammer
- 29: Schwenktrichter
- 29': Verstellmechanismus für 29
- 30: Auswurf-Rohr (fixiert)
- 31: Auswurf-Zylinder (schwenkbar)
- 32: Schwenkhebel
- 33: Auswurf-Schlitz in 31
- 34: Auswurf-Schlitz in 30
- 35: Vibrationselement
- 36: Klemmring
- 37: Piezo-Element
- 38: Speisekabel
- 39: Schwenkarm
- 40: Wellensicherung (Seger-Ring)
- 41: Ringnut
- 42: Motorgehäuse

- α: Winkel (zwischen Lot und Mahlwerkachse)

- G: HF-Generator
- KB: Kaffeebohnen
- L: Lot
- S: Stator
- T: Speisequelle (zeitlich gesteuert)

## Patentansprüche

1. Vorrichtung zur Aufbereitung von Kaffeepulver, bestehend aus einem Behälter für Kaffeebohnen (28), einem Mahlwerk (3) mit Elektromotor (42) und einer Dosier- und/oder Bremsvorrichtung (22) für gemahlenes Kaffeepulver, wobei das Mahlwerk je eine feststehende und eine rotierende Mahlscheibe (5) mit innenliegenden Mahlzähnen aufweist, diese Mahlscheiben relativ zueinander in ihrem Abstand verstellbar sind und die Dosier- und/oder Bremsvorrichtung tangential und radial, ausserhalb der Mahlscheiben vorgesehen ist, wobei die statische Zufuhr der Kaffeebohnen über einen Schütt-Trichter (2) vorwiegend halbseitig zwischen die Mahlscheiben erfolgt und das resultierende Kaffepulver tangential und durch die Schwerkraft unterstützt durch einen Auswurf (21) strömt, **dadurch gekennzeichnet, dass** die Verstellvorrichtung (6,10) der einen Mahlscheibe (5) Bestandteil eines mahlwerkseitigen Lagerflansches (6) ist.

2. Vorrichtung nach Anspruch 1, **dadurch gekennzeichnet, dass** der Lagerflansch (6) ein Aussengewinde (7) und ein Kugellager (8) aufweist, wobei der Lagerflansch (6) in einem Kahlwerkgehäuse (15) axial verstellbar eingeschraubt ist.

3. Vorrichtung nach Anspruch 2, **dadurch gekennzeichnet, dass** das Mahlwerkgehäuse (15) über Verbindungsstege (15') mit einem frontseitigen Motorgehäuse (42) verbunden ist, und dass im Randbereich des Lagerflansches (6), in Achsrichtung, Bohrungen (10) für den Eingriff eines Verstellwerkzeugs vorgesehen sind.

4. Vorrichtung nach Anspruch 3, **dadurch gekennzeichnet, dass** wenigstens eine Druckfeder (19) vorgesehen ist, welche den Lagerflansch (6) in axialer Richtung belastet.

5. Vorrichtung nach Anspruch 1, **dadurch gekennzeichnet, dass** die portionenweise Dosierung der Kaffeepulvermenge über eine reproduzierbare Vorwahl der Mahldauer (T) erfolgt.

6. Vorrichtung nach Anspruch 1, **dadurch gekennzeichnet, dass** im Kaffeepulver-Auswurf (21) eine Federlamelle (22) als dynamische Pulver-Bremse angeordnet ist.

7. Vorrichtung nach Anspruch 6, **dadurch gekennzeichnet, dass** der Kaffeepulver-Auswurf (21') eine Zylinderform aufweist und auf einer Endseite geschlossen ist, und dass in dessen Zylindermantel (30,31) ein Pulver-Auslass (33,34) vorgesehen ist.

8. Vorrichtung nach Anspruch 7, **dadurch gekennzeichnet, dass** der Kaffeepulver-Auswurf (21') zwei ineinander geschobene Hohlzylinder (30,31) mit Pulver-Auslässen (33,34) aufweist, wobei diese während des Mahlvorgangs gegeneinander verschoben und nach diesem durch eine Drehung kongruent sind.

9. Vorrichtung nach Anspruch 8, **dadurch gekennzeichnet, dass** am inneren Hohlzylinder (31) ein Vibrationselement (35,37) angeschlossen ist.

10. Vorrichtung nach Anspruch 1, **dadurch gekennzeichnet, dass** im Behälter (28) wenigstens zwei Kammern (28', 28") für unterschiedliche Kaffeesorten vorhanden sind.

11. Vorrichtung nach Anspruch 10, **dadurch gekennzeichnet, dass** dem Behälter (28) wenigstens zwei Mahlwerke (3) zugeordnet sind, welchen ein steuerbarer Schwenktrichter (29,29') nachgeschaltet ist.

## Claims

1. A device for the preparation of coffee powder, comprising a container for coffee beans (28), a grinding mechanism (3) with an electric motor (42), and a dispensing and/or braking device (22) for ground coffee powder, wherein the grinding mechanism comprises one fixed and one rotating grinding wheel (5) with internal grinding teeth, the distance between the grinding wheels is adjustable and the dispensing and/or braking device is provided tangentially and radially outside the grinding wheels, wherein the coffee beans are fed in statically via a discharge funnel (2) substantially unilaterally between the grinding wheels, and the resulting coffee powder flows tangentially through an ejection opening (21) assisted by gravity, **characterised in that** the adjusting device (6, 10) of the one grinding wheel (5) is part of a bearing flange (6) on the grinding mechanism side.

2. A device according to claim 1, **characterised in that** the bearing flange (6) has an external thread (7) and a ball bearing (8), the bearing flange (6) being screwed into a grinding-mechanism housing (15) in an axially adjustable manner.

3. A device according to claim 2, **characterised in that** the grinding-mechanism housing (15) is connected via connecting members (15') to a motor housing (42) at the front, and **in that** bores (10) are provided in the edge region of the bearing flange (6) in the axial direction for the engagement of an adjusting tool.

4. A device according to claim 3, **characterised in that** at least one compression spring (19) is provided which loads the bearing flange (6) in the axial direction.

5. A device according to claim 1, **characterised in that** the dispensing of the coffee powder in portions is carried out by reproducible preselection of the grinding time (T).

6. A device according to claim 1, **characterised in that** a spring blade (22) is arranged as a dynamic powder brake in the coffee-powder ejection opening (21).

7. A device according to claim 6, **characterised in that** the coffee-powder ejection opening (21') is cylindrical in shape and is closed at one end, and **in that** a powder outlet (33, 34) is provided in its cylindrical casing (30, 31).

8. A device according to claim 7, **characterised in that** the coffee-powder ejection opening (21') has two hollow cylinders (30, 31) pushed one inside the other and provided with powder outlets (33, 34), these being mutually displaced during the grinding process and being aligned thereafter by rotation.

9. A device according to claim 8, **characterised in that** a vibration element (35, 37) is connected to the inner hollow cylinder (31).

10. A device according to claim 1, **characterised in that** at least two chambers (28', 28") are provided in the container (28) for different types of coffee.

11. A device according to claim 10, **characterised in that** at least two grinding mechanisms (3) are associated with the container (28), a controllable tilting funnel (29, 29') being connected downstream of the grinding mechanisms (3).

## Revendications

1. Dispositif pour préparer du café moulu, composé d'un réservoir (28) pour des grains de café, d'un mécanisme de broyage (3) avec un moteur électrique (42), et d'un dispositif de dosage et/ou de freinage (22) pour la poudre de café moulue, le mécanisme de broyage présentant respectivement un disque de broyage stationnaire et un disque de broyage rotatif (5) avec des dents de mouture intérieures, ces disques de broyage pouvant être réglés l'un par rapport à l'autre dans leur écartement, et le dispositif de dosage et/ou de freinage étant prévu à l'extérieur des disques de broyage, dans la direction tangentielle et radiale, l'arrivée statique des grains de café étant assurée par l'intermédiaire d'un entonnoir de déversement (2), principalement sur une moitié entre les disques de broyage, et la poudre de café résultante s'écoulant de façon tangentielle, et assistée par la force de gravité, au travers d'une éjection (21), **caractérisé en ce que** le dispositif de réglage (6, 10) de l'un des disques de broyage (5) fait partie intégrante d'une bride d'appui (6) côté mécanisme de broyage.

2. Dispositif suivant la revendication 1, **caractérisé en ce que** la bride d'appui (6) présente un filetage extérieur (7) et un roulement à billes (8), la bride d'appui (6) étant vissée avec une possibilité de déplacement dans la direction axiale dans un carter (15) du mécanisme de broyage.

3. Dispositif suivant la revendication 2, **caractérisé en ce que** le carter (15) du mécanisme de broyage est assemblé par l'intermédiaire de traverses de jonction (15') avec un carter de moteur (42) côté frontal, et **en ce que** des alésages (10) sont prévus pour l'engagement d'un outil de réglage dans la zone de bordure de la bride d'appui (6), dans la direction axiale.

4. Dispositif suivant la revendication 3, **caractérisé en ce qu'**il est prévu au moins un ressort de pression (19), qui sollicite la bride d'appui (6) dans la direction axiale.

5. Dispositif suivant la revendication 1, **caractérisé en ce que** le dosage par portions de la quantité de poudre de café est assuré par l'intermédiaire d'une présélection reproductible de la durée de mouture (T).

6. Dispositif suivant la revendication 1, **caractérisé en ce qu'**une lamelle élastique (22) est disposée sous forme de frein dynamique de poudre dans l'éjection (21) de café moulu.

7. Dispositif suivant la revendication 6, **caractérisé en ce que** l'éjection (21') de café moulu présente une forme cylindrique et est fermée sur un côté extrême, et **en ce qu'**une sortie de poudre (33, 34) est prévue sur son enveloppe cylindrique (30, 31).

8. Dispositif suivant la revendication 7, **caractérisé en ce que** l'éjection (21') de café moulu présente deux cylindres creux (30, 31) emboîtés l'un dans l'autre avec des sorties de poudre (33, 34), ces sorties étant déplacées l'une par rapport à l'autre pendant l'opération de broyage et étant congruentes par un mouvement de rotation après l'opération précitée.

9. Dispositif suivant la revendication 8, **caractérisé en ce qu'**un élément de vibration (35, 37) est raccordé au cylindre creux intérieur (31).

10. Dispositif suivant la revendication 1, **caractérisé en ce qu'**au moins deux compartiments (28', 28'') sont prévus dans le réservoir (28) pour différentes variétés de café.

11. Dispositif suivant la revendication 10, **caractérisé en ce qu'**au moins deux mécanismes de broyage (3) sont associés au réservoir (28), mécanismes en aval desquels est monté un entonnoir pivotant (29, 29') doté d'une possibilité de commande.
